# EUROPÄISCHE PATENTSCHRIFT

(11) **EP 1 009 113 B1**
(45) Veröffentlichungstag und Bekanntmachung des Hinweises auf die Patenterteilung: **02.05.2001**
(21) Anmeldenummer: 98122808.3
(22) Anmeldetag: 01.12.1998
(51) Int. Cl.: H04H 1/00

(54) **Satelliten-Kommunikationsanlage, insbesondere Satelliten-Empfangsanlage sowie zugehöriges Verfahren zum Betrieb einer Antennen-Empfangsanlage**
Satellite communication system, in particular satellite receiving system and method for management of an antenna receiving system
Système de communication par satellite, en particulier système de réception satellite et méthode de fonctionnement d'un système de réception par antenne

(43) Veröffentlichungstag der Anmeldung: 14.06.2000
(73) Patentinhaber: Kathrein-Werke KG, 83004 Rosenheim (DE)
(72) Erfinder: Ilsanker, Anton, 83083 Riedering (DE); Dr. Ephan, Norbert, 83088 Kiefersfelden (DE); Flinner, Udo, 83059 Kolbermoor (DE)
(74) Vertreter: Flach, Dieter Rolf Paul, Dipl.-Phys.

(56) Entgegenhaltungen:
- WO-A-97/49240
- DE-A- 3 441 930
- DE-U- 29 607 766
- US-A- 5 574 964
- KRIEBEL H: "DIGITALES SCHALTKONZEPT FUER SAT-ANLAGEN" FUNKSCHAU, Bd. 67, Nr. 22, 13. Oktober 1995, Seite 58/59 XP000536512
- K MUELLER: "Sat-Anlagen DiSEqC gesteuert" RFE, 1997, Nr. 6, Seiten 32-34, XP002101051

## Beschreibung

Die Erfindung betrifft eine Satelliten-Kommunikationsanlage, insbesondere Satelliten-Empfangsanlage, sowie ein zugehöriges Verfahren zu deren Betrieb nach dem Oberbegriff des Anspruches 1 bzw. 16.

Für die unterschiedlichen Einsatzzwecke sind unterschiedlichste Satellitenanlagen bekannt geworden. Zu den Satellitenanlagen gehören neben den bekannten Satelliten-Empfangsanlagen auch sogenannte Transceiver, die zum Empfangen und Senden dienen, wie aber auch Sendeanlagen. Insbesondere bei Mehrfamilienhäusern kann eine Satelliten-Empfangsanlage mit einer Kopfstation vergleichbar der aus dem Prospekt "Kathrein-Antennen-Electronic", Ausgabe 8/96 bekannten Empfangsanlage UFO eingesetzt werden. Die Empfangsanlage umfaßt in der Kopfstation eine Vielzahl von Konvertern, wobei jeweils ein zu empfangendes Programm mittels eines Konverters in eine terrestrische Empfangs-Frequenz umgesetzt wird. Sollen n verschiedene Programme empfangen werden, so muß die Kopfstation n Receiver aufweisen. Alle angeschlossenen Teilnehmer können dann durch entsprechende Kanalauswahl an ihrem Fernsehgerät oder Videorecorder die entsprechenden Programme empfangen oder aufzeichnen.

Darüber hinaus ist auch bereits eine sogenannte Kathrein Mini-Ufo-Anlage bekanntgeworden. Diese Anlage umfaßt eine Satelliten-Empfangsanlage, d.h. eine Kopfstation mit für jeden angeschlossenen Teilnehmer einem Receiver, der aber nunmehr teilnehmerabhängig von jedem Teilnehmer angesteuert wird. Dazu ist für jeden Teilnehmer in der Regel in dem Raum, in dem der Fernseher oder Videorecorder aufgestellt ist, ein Infrarot-Steuergerät angeschlossen, worüber die Steuersignale über das 220 V Netz zur Kopfstation, d.h. bis zu den in der Kopfstation vorgesehenen einzelnen Receivern weitergeleitet werden können. Auch wenn beispielsweise über die Satelliten-Empfangsanlage grundsätzlich fünfzig unterschiedliche Satelliten-Programme empfangbar sind, wird bei fünf angeschlossenen Teilnehmer das von jedem Teilnehmer ausgewählte Satellitenprogramm auf eine bestimmte Kanalfrequenz umgesetzt. Sind vier angeschlossene Teilnehmer aktiv, so werden fünf ausgewählte Programme auf fünf unterschiedlichen Kanalfrequenzen über eine Antennenleitung zu den fünf angeschlossenen Teilnehmern weitergeleitet.

Ansonsten sind Einzel-Empfangsanlagen bekannt, bei welchen jeweils nur ein Teilnehmer über den angeschlossenen Receiver ein von ihm ausgewähltes Programm empfangen kann. Darüber hinaus sind auch sogenannte Twin-Konverter (Twin-LMB) bekannt, um gleichzeitig zwei unterschiedliche Programme empfangen zu können. Dazu ist es jedoch erforderlich, daß die die Konverterschaltung umfassende Eingangsempfangs-Schaltungsanordnung zwei Ableitungen zum angeschlossenen Teilnehmer bzw. Receiver umfaßt, um dann beispielsweise am angeschlossenen Fernsehgerät ein Programm zu empfangen und über ein am Twin-Receiver angeschlossenes Videogerät (VCR) das über die zweite Antennenleitung eingespeiste weitere Programm aufnehmen zu können.

Auch bei derartigen Einzel-Empfangsanlagen kann durch Einschaltung eines Umschalttones von 0 KHz auf 22 KHz in jedem der beiden Konverterzweige eine Umschaltung von einem unteren auf ein oberes Frequenzband und zum Empfang von vertikalen und horizontalen Polarisationen von dem angeschlossenen Twin-Receiver aus vorgenommen werden.

Obgleich die beiden erstgenannten Lösungen nur eine einzige Antennenleitung zu der Vielzahl von angeschlossenen Teilnehmern benötigt, sind diese technischen Lösungen jedoch aufwendig und dadurch kostenintensiv. Die zuletzt genannte Twin-Lösung zum Empfang zweier Programme oder die Verwendung einer entsprechenden Umschaltmatrix, von der zu jedem Teilnehmer eine separate Antennenleitung verläuft, ist demgegenüber preislich deutlich günstiger, da hier unterschiedlicher Konverter an jedem Antennenkabel angeschlossen werden können. Das Problem besteht jedoch in der Praxis häufig darin, daß in vielen Häusern zu den angeschlossenen Teilnehmern nicht ausreichend viele Antennenleitungen verlegt sind.

Schließlich wird auch auf die Vorveröffentlichungen HENNING, KRIEBEL: Digitales Schaltkonzept für Sat-Anlagen, in: Funkschau 1995 Heft 22, S. 58,59 sowie MÜLLER, K.: Sat-Anlagen DiSEqC gesteuert, in: RFE 1997, Heft 6, S. 32-34 verwiesen. Aus diesen Druckschriften sind jeweils DiSEqC-gesteuerte Satelliten-Empfangsanlagen bekannt, welche eine Eingangs-Empfangsschaltung, eine Schaltmatrixanordnung (Multischalter) zum auswahlmäßigen Empfang von einem oder mehreren Satelliten mit vertikaler oder horizontaler Polarisation in einem unteren oder oberen Frequenzband sowie eine Steuerungseinheit (in dem Receiver) umfassen. Die Steuerung zwischen der Steuerungseinheit und den separat angeschlossenen Receivern erfolgt jeweils über eine zwischen dem Receiver und der Steuerungseinheit geschaltete Antennenleitung.

Auch bei diesen Lösungen werden also mehrere Antennenkabel benötigt.

Aufgabe der vorliegenden Erfindung ist es von daher, eine Satelliten-Anlage, d.h. eine Satelliten-Empfangs- und/oder Sendeanlage bzw. ein zugehöriges Verfahren zu deren Betriebsweise zu schaffen, bei der zwei Teilnehmer und mehr angeschlossen werden können, die gegenüber herkömmlichen Lösungen technisch einfacher und damit günstiger aufgebaut und dadurch letztlich einfacher und kostengünstiger betreibbar ist.

Die Aufgabe wird erfindungsgemäß bezüglich der Satellitenanlage entsprechend den im Anspruch 1 und bezüglich des Betriebsverfahrens entsprechend den im Anspruch 16 angegebenen Merkmalen gelöst. Vorteilhafte Ausgestaltungen der Erfindung sind in den Unteransprüchen angegeben.

Die vorliegende Erfindung beschreitet nunmehr einen völlig anderen Weg. Erfindungsgemäß können also an einer einzigen Antennenleitung z.B. vier oder acht Teilnehmer angeschlossen werden, ohne daß es zu Problemen bezüglich der Datenübertragung und Ansteuerung der Teilnehmer und Zuordnung bestimmter Adressen kommt.

So kann gemäß der Erfindung beispielsweise in einer Kopfstation ein Konverterblock vorgesehen sein, in welchem für jeden angeschlossenen Teilnehmer eine separate Konverterstufe vorgesehen ist. Dort wird das jeweils vom einzelnen angeschlossenen Teilnehmer ausgewählte Satellitenprogramm, d.h. die entsprechende Satellitenprogramm-Kanalfrequenz in unterschiedliche Kanalfrequenzen mit ausreichendem Frequenzabstand umgesetzt und über eine Summenschaltung mit einem gemeinsamen zu allen Teilnehmern führenden Receiverbus, d.h. einer Antennen-Ableitung eingespeist.

An dieser Antennenleitung sind dann die verschiedenen Teilnehmer angeschlossen.

Bevorzugt erfolgt dabei in der jeweiligen Konverterstufe eine Umsetzung in einen einem einzelnen Teilnehmer und damit Receiver zugeordneten Frequenzkanal, der im Bereich der empfangenen Satellitenfrequenzebene liegt, so daß vom Prinzip her teilnehmerseitig herkömmliche Receiver angeschlossen werden können.

Die angeschlossenen Receiver arbeiten mit einer Controller-Einheit so zusammen, daß mittels eines entsprechenden Receiver-Signals die ihm zugeordnete Konverterstufe so angesteuert wird, daß am entsprechenden Ausgang dieser Konverterstufe des Konverterblockes das ausgewählte Programm auf einen voreingestellten Frequenzkanal umgesetzt und in die alleinige Antennenleitung eingespeist wird. Dazu ist erfindungsgemäß nunmehr ein Datenbus für die Steuerung der angeschlossenen Teilnehmer/Receiver im zusammenspiel mit der Controller-Einheit vorgesehen, der erfindungsgemäß aus dem Antennenkabel, d.h. üblicherweise aus einem einzigen zu den mehreren angeschlossenen Teilnehmer führenden Antennenkabel besteht. Dieser Datenbus kann als Multimaster-Bus bezeichnet werden, da die angeschlossenen Teilnehmer nicht in einer Master-Slave-Konfigurationen betrieben werden, sondern im Prinzip gleichberechtigt an diesen Multimaster-Bus angeschlossen sind.

Über diesen Multimaster-Bus ist es dann möglich, vom Controller aus jedem Receiver eine bestimmte Adresse in der Konverterstufe zuzuordnen, so daß über die'dem jeweiligen Receiver zugeordnete Konverterstufe ein teilnehmerseitig ausgewähltes Programm auf einen anderen Kanal, d.h. eine andere Kanalfrequenz umsetzt wird, so daß alle angeschlossenen Teilnehmer/Receiver über diesen ihnen zugewiesenen Kanal auswahlmäßig alle über die Satelliten-Empfangsantenne grundsätzlich empfangbaren Programme auswählen und empfangen können. Dem Konverterblock ist eine Matrix vorgeschaltet, die es den einzelnen Teilnehmern, d.h. den angeschlossenen Receivern, unabhängig voneinander erlaubt, jedes beliebige Programm, unabhängig davon, ob es mit vertikaler oder horizontaler Polarisation in einem unteren oder oberen Frequenzband übertragen wird, auszuwählen und zu empfangen.

Die angeschlossenen Receiver arbeiten mit einer Controller-Einheit so zusammen, daß jeder Receiver nur dann Steuersignale senden und empfangen kann, wenn kein anderer Receiver aktiviert ist bzw. der Controller keine Signale an den Bus abgibt. Erfindungsgemäß sind dazu also Maßnahmen für einen Kollisionsschutz vorgesehen, worüber gewährleistet ist, daß zu einem gegebenen Zeitpunkt immer nur ein Receiver am Bus aktiv sein kann, also Daten aussenden oder vom Controller empfangen kann. Dazu wird der Multimaster-Bus mittels einer Gleichspannungs-Pegelumschaltung so betrieben, daß stets erkennbar ist, ob der Multimaster-Bus zur Übertragung neuer Sendesignale durch einen anderen Receiver betriebsbereit oder gesperrt ist. Sobald ein Receiver Sendesignale an die Controllerstationen abgibt oder von dieser empfängt, ist durch die erwähnte bevorzugt durchgeführte Gleichstrompegelumschaltung der Multimaster-Bus in seinen Zustand "gesperrt" versetzt, so daß andere Receiver nicht in eine Kommunikation mit dem Controller eintreten können.

In einer bevorzugten Ausführungsform der Erfindung ist das Übertragungsprotokoll so aufgebaut, daß dann, wenn zwei oder drei Receiver gleichzeitig betätigt werden sollten, diese nach einer unterschiedlich eingestellten Zeit jeweils überprüfen, ob noch ein anderer Receiver sich im "Kommunikationsstadium" befindet. Wird dies festgestellt, wird der jeweilige Receiver, der dies erkennt, wieder in seine Ausgangslage zurückgeschaltet und muß einen erneuten Wartezyklus abwarten. Dadurch kann gewährleistet werden, daß stets nur zu einem Zeitpunkt über einen Receiver eine Konverterstufe angesteuert wird.

Die Erfindung wird nachfolgend anhand eines Ausführungsbeispieles näher erläutert. Dabei zeigen im einzelnen:
- Figur 1 :: einen grundsätzlichen Aufbau der erfindungsgemäßen Satelliten-Empfangsanlage mit einer Matrixkaskade, an derem Ausgang ein Konverterblock mit einer Vielzahl von erfindungsgemäßen Konverterstufen vorgesehen ist;
- Figur 2 :: eine auszugsweise detailliertere Wiedergabe des Konverterblockes gemäß Figur 1 ;
- Figur 3 :: Struktur eines Befehls für die Multimaster-Kommunikation; und
- Figur 4 :: ein Beispiel für den erfindungsgemäß vorgesehenen Kollisionsschutz, wenn z.B. zwei Receiver gleichzeitig aktiviert werden.

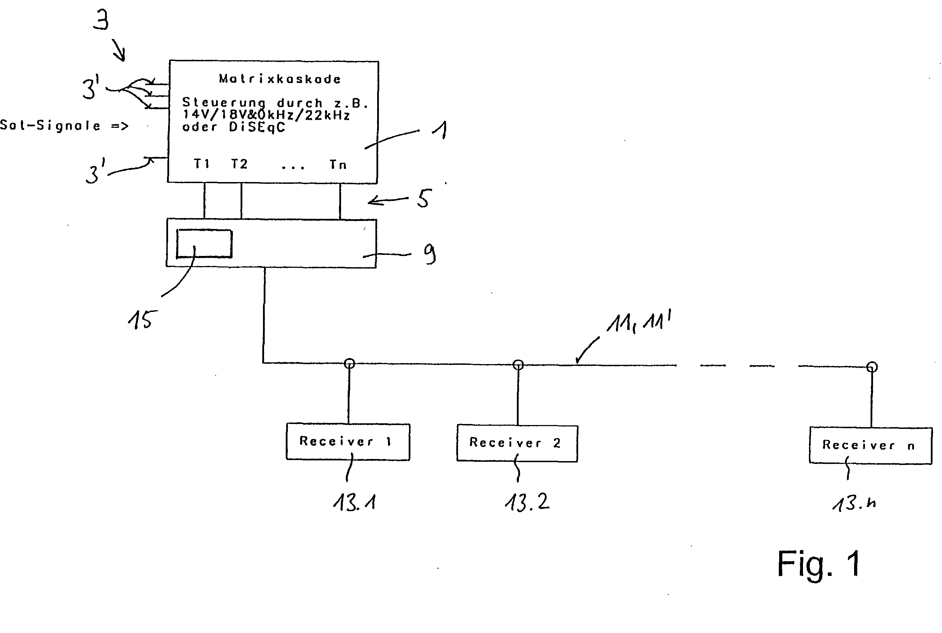

In Figur 1 ist eine Matrixanordnung 1 mit einem Eingang 3 und einem Ausgang 5 wiedergegeben. Die Matrix kann auch als Matrixkaskade aufgebaut sein, bzw. in der Form von zwei oder mehr nacheinander geschalteten vier x vier-Matrixblöcken. Beispielsweise über vier Eingänge können jeweils das vertikale und das horizontale untere und obere Band der über eine Satellitenposition ausgestrahlten Programme empfangen werden. Die verschiedenen über vertikale oder horizontale Polarisationen empfangenen Frequenzbänder liegen dann an den verschiedenen Eingangsleitungen 3' des Eingangs 3 der Matrix-Anordnung 1 an. Schließlich kann die Matrix-Anordnung so aufgebaut sein, daß eine Steuerung durch Umschaltung von 14 V/18 V und/oder von 0 KHz/22 KHz oder mittels DiSEqC erfolgen kann.

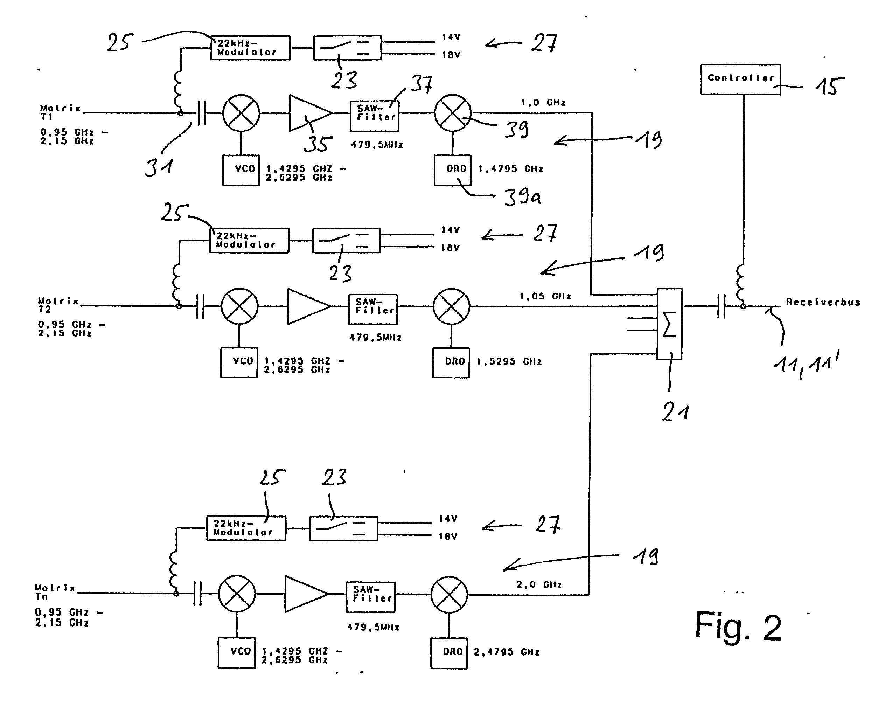

Auf der Ausgangsseite ist gemäß Figur 1 ein Konverterblock 9 geschaltet, auf den nachfolgend noch anhand von Figur 2 näher eingegangen wird.

Am Ausgang des Konverterblockes ist eine Antennenleitung, nachfolgend auch kurz Ableitung 11 genannt, angeschlossen, die zu den n-Receivern 13 führt.

Schließlich ist auch noch eine Steuerungseinheit 15 vorgesehen, die separat zum Konverterblock oder im Konverterblock 9 mit untergebracht sein kann, und die für die Ablaufsteuerung benötigt wird.

Wie anhand von Figur 2 zu ersehen ist, umfaßt der Konverterblock 9 entsprechend der Ahzahl der angeschlossenen Receiver n-Konverterstufen 19. Jede Konverterstufe 19 ist zwischen einem Ausgangsanschluß T₁ bis Tₙ der Matrixanordnung 1 und einer Summenschaltung 21 vorgesehen, von der dann die erwähnte alleinige Antennenleitung 11 ausgeht, die nachfolgend teilweise auch als Receiverbus 11 bezeichnet wird.

Um die Matrix zu steuern, muß die Steuereinheit ein Umschaltsignal von 14 Volt bzw. 18 Volt Gleichspannung und ein Tonsignal von wahlweise 0 KHz und beispielsweise 22 KHz abgeben, um darüber die über vertikale oder horizontale Polarisationen in einem unteren oder oberen Frequenzband von einer Satellitenposition empfangenen Programme auszuwählen. Um die entsprechende Ansteuerung in der Matrix-Anordnung 1 in bekannter Weise vorzunehmen, umfaßt jede Konverterstufe 19 einen Spannungsschalter 23 sowie einen nachgeordneten 22 KHz-Modulator 25. Der jeweilige Spannungsschalter 23 und der 22 KHz-Modulator 25 werden vom Controller 15 entsprechend den von den Receivern 13.1 bis 13.n gesendeten Signalen gesteuert. Mit anderen Worten können die Receiver 13 mittels dem DiSEqC-Protokoll den Controller ansteuern, der diese Signale umsetzt bzw. weitergibt und dabei entsprechend dem betreffenden Modulator 22 und den Spannungschalter 23 zur Auswahl und Einstellung eines gewünschten Programmes ansteuert. Ebenso können die Receiver aber herkömmlich mittels einer Gleichspannungsumschaltung und einer Ab- und Zuschaltung eines Frequenztones beispielsweise von 22 KHz arbeiten, um hierüber das gewünschte Programm auszuwählen, wobei dann vom Controller ebenfalls wieder eine entsprechende Umsetzung zur Ansteuerung der Matrix 1 vorgenommen wird. Nur der Vollständigkeit halber wird angemerkt, daß eingangsseitig an einer oder mehrerer kaskadenartig zusammengeschalteter Matrizen beispielsweise auch acht Eingänge vorgesehen sein können, um nicht nur ein oberes und unteres vertikal bzw. horizontal polarisiertes Programm eines Satelliten, sondern Programme von mehreren Satelliten empfangen zu können. Auch hier kann dadurch dann teilnehmerseitig eine Vielfachauswahl vorgenommen werden.

Wie aus Figur 2 auch ersichtlich ist, umfaßt jede Konverterstufe 19 ferner in Empfangsrichtung folgend parallel zu dem Schaltzweig 27 einen Kondensator 31 zur galvanischen Trennung, einen ersten Mischer 33, einen nachgeschalteten Verstärker 35, einen nochmals nachgeschalteten SAW-Filter 37 sowie einen ausgangsseitig geschalteten weiteren Mischer 39.

Während der erste Mischer 33 über ein VCO 33a (also einen spannungsgesteuerten Oszillator) mit einer darüber unterschiedlich wählbaren Oszillatorfrequenz betreibbar ist, wird die Oszillatorfrequenz des zweiten Mischers 39 beispielswise mittels einer festeingestellten Lokaloszillatorfrequenz f₁ bis fₙ eines jeweils zugeordneten Lokaloszillators 39a angesteuert. Durch den zwischengeschalteten SAW-Filter 37 kann die kanalbezogene Durchlaßfrequenz von beispielsweise 479,5 MHz eingestellt werden.

Liegt beispielsweise das gesamte satellitenantennenseitig empfangene Frequenzspektrum zwischen 0,95 GHz bis 2,15 GHz (wobei dieses Frequenzspektrum an jedem Matrix-Ausgang T₁ bis Tₙ anliegen kann) und ist beispielsweise die Lokaloszillatorfrequenz des ersten variabel einstellbaren Lokaloszillators 33a von 1,4295 GHz bis 2,6295 GHz variierbar, so ist bei der angegebenen Durchlaßfrequenz des Filters 37 und bei einer fest eingestellten Lokaloszillatorfrequenz von beispielswelsweise 1,4795 GHz der ersten Konverterstufe die variabel einstellbare Lokaloszillatorfrequenz des ersten Mischers 33 so veränderbar, daß ein hierüber ausgewähltes Programm auf eine Kanalmittenfrequenz von 1,0 GHz eingestellt wird.

In der zweiten Konverterstufe 19b ist beispielsweise die ausgangsseitig fest eingestellte. Lokaloszillatorfrequenz auf 1,5295 GHz eingestellt, also um 0,05 GHz höher. Dementsprechend wird hier die variabel einstellbare Lokaloszillatorfrequenz des ersten Mischers 33 hierüber so gewählt, daß das auswahlmäßig empfangene Programm mit einer Kanalfrequenz von 1,05 GHz in die gemeinsame Antennenleitung eingespeist wird. Entsprechend werden die fest eingestellten Lokaloszillatorfrequenzen einer jeden nachfolgenden Konverterstufe um 0,05 GHz höher eingestellt, wobei im gezeigten Ausführungsbeispiel die letzte Konverterstufe 19n eine ausgangsseitige Kanalfrequenz von 0 GHz zugewiesen werden kann.

Nachfolgend wird auf die Steuerung und Betriebsweise der Empfangsanlage näher eingegangen. Anders als beim bekannten DiSEqC-Steuerungssystem wird hier die Gleichspannungskomponente zur Kommunikation mit verwendet. Dazu muß die Spannung auf dem Bus hochohmig gomessen werden.

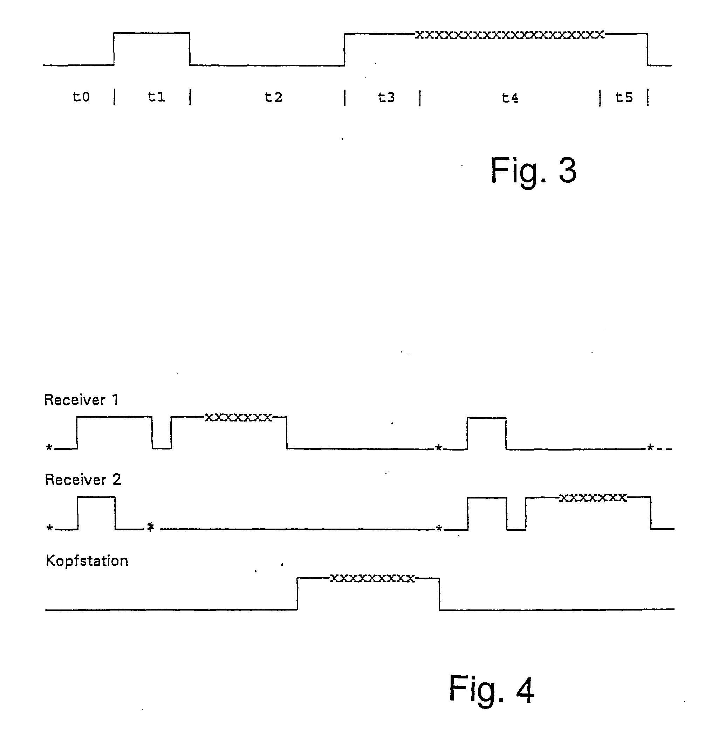

Dabei wird zunächst einmal auf Figur 3 verwiesen, anhand der die Struktur eines Befehls für die Multimaster-Kommunikation erläutert wird.

Daraus ist zu ersehen, daß die Befehlsstruktur einen sog. "Header", also ein Vorsignal umfaßt, welches sich in drei Zeitabschnitte t0, t1 und t2 gliedert, die allesamt dem Kollisionsschutz dienen (worauf später noch eingegangen wird).

Daran schließt sich das eigentliche Steuerungssignal z.B. in Form eines Adreßanforderungs- oder Programmbefehl-Signals an, welches sich ebenfalls wieder in die drei Zeitabschnitte t3, t4 und t5 gliedert, wobei t3 und t5 Schutzintervalle darstellen, und im Zeitintervall t4 der eigentliche Signalbefehl, der eine DiSEqC-ähnliche Struktur besitzt, von dem jeweiligen Receiver abgegeben wird.

Von Seiten der Receiver bzw. des Controllers sind dabei vier Funktionszustände zu unterscheiden, nämlich
- der Zustand im Fall einer erstmaligen Adreßanforderung (nach dem Neuanschließen eines Receivers, oder aber, wenn die bereits früher einmal erhaltenen Adreßdaten nicht mehr zur Verfügung stehen oder gelöscht wurden),
- der Zustand im Fall einer nochmaligen späteren Adreßanforderung (nach dem bereits der jeweilige Receiver früher bereits einmal eine Adresse erhalten hatte),
- der Zustand im Fall eines sog. Programmbefehls, d.h. bei der Übermittlung der Daten bezüglich eines teilnehmerseitig am Receiver ausgewählten gewünschten Programms, und
- der Zustand, wenn ein Receiver das Signal für die Adreßvergabe als Antwort vom Controller 15 erhält.

Die möglichen Zeiten für die Werte t0 bis t5 können für die unterschiedlichen Multimaster-Kommunikationsbefehle bzw. -signale im gezeigten Ausführungsbeispiel folgende Werte aufweisen:

| Erstmalige Adreßanforderung | | |
|---|---|---|
| t0 (ms) | 10 | |
| t1 (ms) | 40 | |
| t2 (ms) | 0 | |
| t3 (ms) | 10 | |
| t4 (ms) | 36 | (3 Byte E2 71 07) |
| t5 (ms) | 5 | |

| Spätere Adreßanforderung: | | |
|---|---|---|
| t0 (ms) | 10 | |
| t1 (ms) | 20, 24, 28, 32 | (je nach ehemaliger Adresse) |
| t2 (ms) : | 4, 8 | (je nach ehemaliger Adresse) |
| t3 (ms) : | 10 | |
| t4 (ms) : | 36 | (3Byte E2 71 F07) |
| t5 (ms) : | 5 | |

| Adreßvergabe (Befehl als Antwort vom Controller) : | | |
|---|---|---|
| t0 (me) | 0 | |
| t1 (ms) | 0 | |
| t2 (ms) | 0 | |
| t3 (ms) | 10 | |
| t4 (ms) | 60 | (5Byte E4 Ax yy zz zz) |
| t5 (ms) | 4 | |

| Programmbefehl: | | |
|---|---|---|
| t0 (ms) | 10 | |
| t1 (ms) | 4, 8, 12, 16 | (je nach zugeteilter Adresse) |
| t2 (ms) | 4, 8 | (je nach zugeteilter Adresse) |
| t3 (ms) | 10 | |
| t4 (ms) | 60 | (5Byte EA Ax Fy zz zz) |
| t5 (ms) | 5 | |

Die anhand von Figur 3 wiedergegebene Signalstruktur gilt gleichermaßen für ein von einem Receiver 13 erstmalig abgegebenes Adreßanforderungs-Signal, wie auch im Falle eines späteren Adreßanforderungs-Signals und im Falle eines Signals zur Abgabe eines Programmbefehls (Programmauswahl-Befehl). Lediglich im Falle des Adreßanforderungs-Signals ist das vom Controller als Antwort abgegebene Adreßvergabe-Signal insoweit unterschiedlich gebildet, als dort die Zeiten für t0, t1 und t2 jeweils 0 Sekunden beträgt.

In der nachfolgenden Tabelle sind Werte für die Zuordnung von Adresse und Kollissionsschutz-Header wiedergegeben, und zwar für den Fall eines Programmbefehls (also von Seiten des Receivers/Teilnehmers eine bestimmte Programm-Vorauswahl getroffen wurde und die Daten an den controller gesendet werden), wie aber auch für den Fall eines an den Controller abgegebenen Adreßanforderungs-Signals:

**Tabellen -**

| Zuordnung von Adresse und Kollisionsschutz-Header | | | | |
|---|---|---|---|---|
| | Programmbefehl | | Adreßanforderung | |
| | t1 (ms) | t2 (ms) | t1 (ms) | t2 (ms) |
| A1 | 4 | 4 | 20 | 4 |
| A2 | 8 | 4 | 24 | 4 |
| A3 | 12 | 4 | 28 | 4 |
| A4 | 16 | 4 | 32 | 4 |
| A5 | 4 | 8 | 20 | 8 |
| A6 | 8 | 8 | 24 | 8 |
| A7 | 12 | 8 | 28 | 8 |
| A8 | 16 | 8 | 32 | 8 |

Die Funktionsweise entsprechend dem in Figur 3 wiedergegebenen Befehl ist folgermaßen:

Wird ein Receiver erstmals an eine Satellitenanlage angeschlossen, so überprüft er zunächst für eine Busbeobachtungsphase t0 von 10 ms, ob auf dem Bus eine Busaktivität festgestellt wird. Nur wenn auf dem Bus keine Kommunikation stattfindet, also die vom betreffenden Receiver gemessene Gleichspannung auf der Antennenleitung 11, die nachfolgend teilweise auch als Datenbus 11' bezeichnet wird, 0 Volt beträgt (oder einen Wert unterhalb eines Schwellwertes aufweist), so wird dies als "keine Busaktivität" gewertet. Es findet also keine Datenkommunikation auf dem Datenbus 11', d.h. Antennenleitung 11 statt, so daß grundsätzlich die Abgabe eines erstmaligen Adreßanforderungs-Signals, eines sog. Call-for-Address-Befehles möglich ist.

Nach Ablauf der ersten Busbeobachtungsphase t0 von 10 ms gibt der betreffende Receiver ein Gleichspannungssignal (von beispielsweise 14 V, also über einem Schwellwert liegend) ab, und zwar für eine fest eingestellte Zeit t1 von 40 ms. Diese Phase t1 wird auch als Busanforderungs-Phase bezeichnet, in der ein Signal "High" an den Bus 11' abgegeben wird. Dadurch sollen die anderen Receiver erkennen, daß ein anderer Receiver nunmehr ein Signal zum Controller absenden möchte.

Sollte in dieser Phase ein anderer Receiver zuschalten, so würde er eine Gleichspannung auf der Antennenleitung 11 detektieren, also feststellen, daß bereits eine Datenkommunikation stattfindet. In diesem Falle würden alle anderen Receiver in "Warteposition" verbleiben, da durch die detektierte Gleichspannung der Datenbus für sie gesperrt ist.

Hat der Receiver im genannten Beispiel noch nie eine Adresse erhalten (oder ist eine ihm einmal zugewiesene Adresse im Receiver wieder gelöscht worden), so ist für diesen einmaligen Zustand die weitere Busbeobachtungsphase t2 auf 0 ms gesetzt, so daß sofort das eigentliche Steuersignal, hier das "Call-for-Address-Sendesignal" CfA entsprechend dem Zeitraum t3, t4 und t5 an den Controller 15 über die Antennenleitung 11 abgesendet wird.

Sobald der Controller erkennt, daß nach Ablauf der Zeit t5 das Call-for-Address-Signal abschließend vom Receiver erhalten ist und der Receiver wieder auf den "Low"-Zustand (keine Gleichspannungsfrequenz auf den Bus 11' abgeben) zurückgeschaltet hat, wird ohne Zeitverzögerung sofort vom Controller 15 ein Adreßvergabe-Signal an den betreffenden Receiver zurückgesendet, welches keinen Header aufweist, da entsprechend den oben wiedergegebenen Daten tO bis t2 jeweils 0 ms betragen.

Für den Fall, daß sich ein Receiver zwischenzeitlich im Standby Betrieb befand oder ausgeschaltet wurde und anschließend wieder neu eingeschaltet worden ist, gelten die oben wiedergegebenen Daten nicht für die erstmalige Adreßanforderung, sondern für eine allgemeine (spätere) Adreßanforderung, die sich nur durch die unterschiedlichen Zeiten t1 unterscheiden. Nach erneutem Zuschalten eines Receivers, der schon einmal eine Adresse zugeteilt bekam, werden die Zeiten t1 für den Header für das Adreßanforderungs-Signal aus den Zeiten t1 des diesem Receiver zugeordneten Programmbefehl-Signals hergeleitet, wobei diese ihm jeweils zugeordnete Zeit t1 um 16 ms erhöht wird. Hatte der betreffende, nunmehr wieder zugeschaltete Receiver vorab die Zeit t1 = 8 ms für das Programmbefehl-Signal zugeteilt bekommen, so erhöht sich dadurch die Zeit t1 bei nochmaligem späterem Anschalten für sein Adreßanforderungs-Signal auf t1 = 24 ms u.s.w. und z.b. t2 = 8 ms. Nach dem Busanforderungssignal für die Phase t1 schließt sich somit also noch eine weitere Busaktivitäts-Überprüfungsphase für den Zeitraum t2 an, um nochmals zu überprüfen, daß vor Absendung des eigentlichen Sendesignales (Call-for-Address-Signals oder Programmanforderungs-Signal) kein anderer Receiver vorrangig auf dem Bus aktiv ist.

Nachdem ein Receiver nach Abgabe eines Call-for-Address-Befehls vom Controller ein Adreßvergabe-Signal erhalten hat, kann er einen Programmbefehl an den Controller abgeben, der von seinem Aufbau und seiner Struktur her ebenfalls dem in Figur 3 wiedergegebenen Befehl für die Multimaster-Kommunikation entspricht. Die einzelnen Werte für t0 bis t5 sind in der oben wiedergegebenen Tabelle "Zuordnung von Adresse und Kollisionsschutz-Header" aufgeführt. Unterschiedlich zu einem Adreßanforderungs-Befehl ist lediglich, daß hier nach Abgabe des Programmbefehls an den Controller vom Controller kein Antwort - Signal abgegeben wird.

Aus der vorstehend erläuterten Schilderung ergibt, daß bei der Adreßvergabe das Signal folgendes Format hat:
E4 Az yy xx xx beispielsweise in HEX E4 A8 42 1305 mit der folgenden Bedeutung:
- Az: für die Adressen 1... 8
- A8: Adresse 8
- yy: für den Kollisionsschutz, hier im gezeigten Ausführungsbeispiel beispielsweise 42 mit der Bedeutung 14 V 16 ms ein 8 ms Pause
- xx xx: die Sat-ZF-Frequenz von 0950 Mhz bis 2150 Mhz und
- 0000: für nicht umgesetzte Signale, d.h. der Receiver arbeitet normal.

So können beispielsweise acht verschiedene Kollisionsschutz-Header für Befehle.
11, 12, 21, 22, 31, 32, 41, 42. bestehen, denen beispielsweise (programmtechnisch) folgende Bedeutung zugeordnet werden können:
- 11:: erste Stelle 14 V 4 ms ein, zweite Stelle 4 ms Pause,
- 42:: erste Stelle 14 V 16 ms ein, zweite Stelle 8 ms Pause,
usw.

Die dem Kollisionsschutz diendene Überprüfungsphase der Busaktivitäten in den Zeitintervallen t0 bis t2 wird nachfolgend anhand von Figur 4 erläutert.

Figur 4 geht davon aus, daß Receiver 2 bereits angeschaltet ist, also bereits eine Adreßvergabe vom Controller 15 zugeordnet bekam, und daß der Teilnehmer über Receiver 2 versucht, ein neues Programm auszuwählen, so daß Receiver 2 ein neues Programmbefehl-Signal abgeben will. Dazu beobachtet Receiver 2 in der dem Kollisionsschutz dienenden Vorphase t0 = 10 ms, ob eine Datenkommunikation auf der Antennenleitung 11 stattfindet oder nicht. Allenfalls problematisch könnte nunmehr sein, daß zum gleichen Zeitpunkt nunmehr ein zweiter Receiver mit seiner Busüberprüfungsphase beginnt, um nachfolgend ein- Adreßanforderungs- oder Programmbefehl-Signal abzugeben. Um dies zu vermeiden, dient das nachfolgende, im Detail erörterte Kollisionsschutz-Verfahren.

Gemäß dem Ausführungsbeispiel nach Figur 4 wird z.B. gleichzeitig zu dem Zeitpunkt, zu dem Receiver 2 mit der Abgabe seines dem Kollisionsschutz dienenden Header-Signals eines Programmbefehl-Signals beginnen will, eingeschaltet. Hat Receiver 1 in einer vorhergehenden Betriebsphase die Adresse A1 zuerteilt bekommen, so lauteten die alten Daten für das Programmbefehl-signal des Adreßplatzes A1 gemäß der oben wiedergegebenen Tabelle t1 = 4 ms und t2 = 4 ms. Die Zeit für t1 wird dann bei einem erneuten Anschalten des Receivers und dem Versuch der Abgabe eines Call-for-Address-Befehls um 16 ms bezüglich des letzten Programmbefehls erhöht, so daß aus der t1 = 4 ms für den Adreßplatz Al für die nachfolgende Adreßforderung entsprechend der oben-wiedergegebenen Tabelle t1 = 20 ms wird. Dabei wird ferner in dem vorliegenden Beispiel gemäß Figur 4 davon ausgegangen, daß Receiver 2 die Adresse A2 zugewiesen erhielt, dessen Zeiten t1 = 8 ms und t2 = 4 ms betragen.

Wenn also gemäß Ausführungsbeispiel nach Figur 4 Receiver 2 einen neuen Programmbefehl an den Controller abgeben will und Receiver 1 zum gleichen Zeitpunkt angeschaltet wird (wobei mit einem "^{*}" jeweils der Start einer neuen Sequenz gekennzeichnet ist), so beobachten beide Receiver für die Busbeobachtungsphase t0 = 10 ms, ob auf dem Bus 11 eine Kommunikation zwischen einem anderen Receiver und dem Controller stattfindet. Beide Receiver erkennen jedoch während der Vorphase t0 = 10 ms, daß der Bus in seinem Zustand "low" ist, also keine Gleichspannung auf dem Bus anliegt, also keine Kommunikation stattfindet.

Nach Ablauf der Zeit t0 schalten von daher beide Receiver gleichzeitig in ihren aktiven Zustand um, geben also ein Gleichspannungssignal an den Bus 11' ab, wodurch grundsätzlich die "Busanforderung" eingeleitet werden soll, d.h. der Versuch, den Bus für andere Receiver zu sperren, um ein Adreßanforderungssignal oder einen Programmbefehl-Signal an den Controller abzugeben.

während nunmehr die Busanforderung von Receiver 1 20 ms dauert, bricht Receiver 2 die Befehlssequenz nach 8 ms Busanforderung ab, weil bei Beginn des nachfolgenden erneuten Busbeobachtungszeitraumes t2 das Signal von Receiver 1 noch am Bus anliegt, Receiver 2 also feststellt, daß der Bus zur Kommunikation mit dem Controller nicht frei ist.

Nach Ablauf der Busaktivität-Beobachtungsphase t1 =20 ms schaltet Receiver 1 in die Phase t2 um, bei welcher von ihm wiederum kein Gleichspannungssignal an den Bus 11 abgegeben wird. Da auch vom Receiver 2 kein Gleichapannungssignal am Bus anliegt, erkennt Receiver 1, daß er sein Adreßanforderungssignal an die Kopfstation abschicken kann. Sein eigentliches "Call-for-Address-Signal" gemäß der Zeitfolge t3 bis t5 wird von Receiver l'unmittelbar nach Ablauf der Phase t2 an die Kopfstation (Controller 15) abgesandt. Sofort nachdem Receiver 1 die Befehlssequenz beendet hat, startet die Kopfstation die Signalisierung und weist Receiver 1 eine freie Adresse zu (z. B. A6 mit t1 = 8 ms, t2 = 8 ms).

Während der gesamten Kommunikationsphase beobachtet Receiver 2, ob an dem Bus ein Gleichspannungssignal anliegt oder nicht. Nachdem nicht. Receiver 1 am Ende seiner Busanforderungs-Phase nach Ablauf der Zeit t1 wieder in seinen Zustand "Low" umgeschaltet hat, also kein Gleichspannungssignal an die Antennenleitung 11 abgegeben hat, hat auch unmittelbar wieder Receiver 2 festgestellt, daß keine Busaktivität stattfindet. Zu diesem Zeitpunkt begann Receiver 2 wieder mit seiner Busbeobachtungsvorphase für die Zeit t0 = 10 ms. Da aber die erneute Busbeobachtungsphase des Receivers 1 nur für den kurzen Zeitraum t2 = 4 ms andauert, wurde Receiver 2 nach Ablauf dieses Zeitraums t2 = 4 ms erneut feststellen, daß ein anderer Receiver wieder bereits ein Gleichspannungssignal an, den Bus 11 abgegeben und damit das Antennenkabel 11 für die Datenkommunikation für ihn gesperrt ist. Receiver 2 hat deshalb erneut sein Header-Signal abgebrochen und ist in die Busüberwachungsphase zurückgeschaltet worden.

Wenn, wie erläutert, das oben erwähnte Antwortsignal, d.h. das vom Controller an den Receiver 1 abgesandte Adreßvergabesignal beendet ist, erkennt Receiver 2 erneut, daß nunmehr der Bus wieder "frei" ist, da kein Gleichspannungssignal am Bus anliegt. Er beginnt (wie nach der Busanforderungsphase t1 des Receivers 1 schon einmal) eine neue mit "*" gekennzeichnete Sequenz, d.h. Receiver 2 startet seine Befehlssequenz erneut. Allerdings startet jetzt auch Receiver 1 mit der ihm vorher vom Controller zugewiesenen Adresse A6 einen Programmbefehl, weil mit dem Einschalten auch ein Programm eingestellt wird. Beide Receiver starten mit der Busbeobachtungs-Vorphase t0 = 10 ms, wobei auch die Busanforderungsphase ts = 8 ms bei beiden Receivern identisch ist. Im nachfolgenden Beobachtungsintervall t2 muß jedoch Receicer 1 die Befehlssequenz abbrechen, weil Receiver 2 schon nach t2 = ms mit der Aussendung seines eigentlichen Programm-Signals beginnt. Erst wenn Receiver 2 den Befehl abgeschickt hat, startet Receiver 1 erneut seine Befehlssequenz, von dem im Diagramm gemäß Figur 3 nur der Startpunkt in Form eines "^{*}" eingetragen ist.

Daraus ist also ersichtlich, daß neben dem eigentlichen Call-for-Address-Signal bzw. dem Programmbefehl-Signal die gesamte Struktur des Multimaster-Kommunikationsbefehls eine Vorphase mit der Zeitspanne t0 bis t2 umfaßt, die dem Kollisionsschutz dienen, und von einer anfänglichen Busbeobachtungsphase in eine Busanforderungssignalphase mit erneuter nachfolgender Busüberprüfungsphase gegliedert ist. Durch diesen Kollisionsschutz ist gewährleistet, daß immer nur ein Receiver Befehle an den Controller abgeben und im Falle einer Adreßanforderung unmittelbar danach vom Controller nur einen für ihn bestimmte Adreßplatz erhalten kann.

Als günstig erweist sich dabei auch, daß die Zeiten t2 für die zweite Busbeobachtungsüberprüfungsphase für alle Receiver kürzer sind als die für alle Receiver verbindliche erste Busbeobachtungsphase t0, die im gezeigten Ausführungsbeispiel 10 ms betragen, wohingegen die Zeiten t2 für alle Receiver kleiner als 10 ms sind. Dadurch konnte auch in dem oben erwähnten Ausführungsbeispiel Receiver 1 problemlos nach erfolgreicher Abgabe seines Header-Signals mit der Absendung seines Adreßanforderungs -Signals fortfahren.

Ebenso erfolgt der Kollisionsschutz bei einem oder mehreren Receivern, die nur ein Adreßanforderungssignal abgeben, oder auch im Falle von mehreren Receivern, die nur ein Programmbefehl-Signal zum Controller absenden wollen. Der Kollisionsschutz ist ebenso wirksam, wenn ein oder mehrere Receiver ein Adreßanforderungesignal und andere Receiver gleichzeitig ein Programmbefehl-Signal abgeben wollen.

## Patentansprüche

1. Satelliten-Kommunikationsanlage, insbesondere Satelliten-Empfangsanlage mit einer Schaltungsanordnung (1) zum auswahlmäßigen Empfang von elektromagnetischen Wellen, die von einem oder gegebenenfalls mehreren Satelliten mit vertikaler und horizontaler Polarisation gegebenenfalls in einem unteren oder oberen Frequenzband ausgestrahlt werden, mit folgenden Merkmalen:
- einer Steuerungseinheit (15), und
- einem Datenbus zur Steuerung mehrerer Teilnehmer/Receiver (13)
**gekennzeichnet durch** folgende weitere Merkmale:
- der Datenbus umfasst einen gemeinsamen Multimaster-Datenbus (11'), über welchen eine Datenkommunikation zwischen den anschließbaren Teilnehmern/Receivern (13) und der Steuerungseinheit (15) durchführbar ist zur Steuerung und Zuordnung der von den einzelnen Teilnehmern/Receivern ausgewählten und angeforderten Satellitenprogramme;
- der gemeinsame Multimaster-Datenbus (11') umfasst eine gemeinsame Antennenleitung (11), und
- die Teilnehmer/Receiver (13) sind mit einer Einrichtung zur Erzeugung und Auswertung eines Kollisionsschutz-Signals versehen, welches sicherstellt, dass zu einem bestimmten Zeitpunkt eine Kommunikation mit der Steuerungseinheit (15) nur von Seiten eines einzigen Teilnehmers/Receivers (13) aus durchführbar ist.

2. Satelliten-Kommunikationsanlage nach Anspruch 1, **dadurch gekennzeichnet,** dass die Einrichtung zur Erzeugung und Auswertung eines Kollisionsschutz-Signals so aufgebaut ist, dass vor der Absendung eines Steuerungssignals zunächst eine dem eigentlichen Steuerungssignal vorgelagerte Kollisionsschutz-Phase durchgeführt wird, in welcher zunächst der Multimaster-Datenbus (11') auf Aktivitäten eines anderen Teilnehmers/Receivers (13) und/oder der Steuerungseinheit (15) überprüft wird, so dass nur dann, wenn keine Aktivität auf dem Multimaster-Datenbus (11') feststellbar ist, von dem betreffenden Teilnehmer/Receiver (13) eigentliche Steuerungssignale an die Steuerungseinheit (15) abgesendet werden.

3. Satelliten-Kommunikationsanlage nach Anspruch 2, **dadurch gekennzeichnet,** dass die Kollisionsschutz-Phase zumindest dreigegliedert ist und dabei eine erste Busaktivitätsbeobachtungsphase für eine Zeitdauer (t0), in der überprüft wird, ob andere Teilnehmer/Receiver (13) oder die Steuerungseinheit (15) am Multimaster-Datenbus (11') aktiv sind, eine nachfolgende Busanforderungsphase mit einer Zeitdauer (t2), in welcher ein eine Aktivität signalisierendes Signal von dem Teilnehmer/Receiver (13) an den Multimaster-Datenbus (11') abgegeben wird, und eine nachfolgende weitere Busbeobachtungsphase für eine zweite Zeitdauer (t2) umfasst, in der kein Signal (11) an den Multimaster-Datenbus (11') abgegeben wird.

4. Satelliten-Kommunikationsanlage nach einem der Ansprüche 1 bis 3, **dadurch gekennzeichnet,** dass die dem Kollisionsschutz dienende Datenübertragung auf dem Multimaster-Bus (11') zur Steuerung der angeschlossenen Teilnehmer/Receiver (13) auf der Basis einer Signal-Umschaltung basiert, wobei eine Kommunikation zwischen einem Teilnehmer/Receiver (13) und der Steuerungseinheit (15) nur dann begonnen werden kann, wenn zunächst auf dem Multimaster-Bus (11') das Vorliegen eines vordefinierten Signals detektiert wurde.

5. Satelliten-Kommunikationsanlage nach Anspruch 4, **dadurch gekennzeichnet,** dass die Signal-Umschaltung auf der Basis einer Gleichspannungspegel-Umschaltung basiert, wobei eine Kommunikation zwischen einem Teilnehmer/Receiver (13) und der Steuerungseinheit (15) nur dann begonnen werden kann, wenn zunächst auf dem Multimaster-Bus (11') das Vorliegen eines vordefinierten Gleichspannungspegels detektiert wurde.

6. Satelliten-Kommunikationsanlage nach einem der Ansprüche 1 bis 5, **dadurch gekennzeichnet,** dass die dem Kollisionsschutz dienende Datenübertragung auf dem Multimaster-Bus (11') zur Steuerung der angeschlossenen Teilnehmer/Receiver (13) auf einem Signal-Umschalt-System basiert, wobei eine Kommunikation zwischen einem Teilnehmer/Receiver (13) und der Steuerungseinheit (15) nur bei Detektion eines vordefinierten Signals auf dem Multimaster-Bus (11') durchführbar ist.

7. Satelliten-Kommunikationsanlage nach Anspruch 6, dadurch gekennzeichnet, dass die Signal-Umschaltung auf einem Gleichspannungspegel-Umschalt-System basiert, wobei eine Kommunikation zwischen einem Teilnehmer/Receiver (13) und der Steuerungseinheit (15) nur bei Detektion eines vordefinierten Gleichspannungspegels auf dem Multimaster-Bus (11') durchführbar ist.

8. Satelliten-Kommunikationsanlage nach einem der Ansprüche 1 bis 7, dadurch gekennzeichnet, dass die angeschlossenen Teilnehmer/Receiver (13) eine Gleichspannungsdetektor-Einrichtung oder einen Gleichspannungs-Schwellwertdiskriminator umfassen, worüber in Abhängigkeit eines gegenüber eines Schwellwert größeren oder kleineren Gleichspannungssignals der Betriebszustand "gesperrt" oder "betriebsbereit" bei dem betreffenden Teilnehmer/Receiver (13) erkennbar ist.

9. Satelliten-Kommunikationsanlage nach einem der Ansprüche 1 bis 8, **dadurch gekennzeichnet**, dass die Signalstruktur für Datenaustausch zwischen einem Teilnehmer/Receiver (13) und der Steuerungseinheit (15) grundsätzlich so aufgebaut ist, dass dem eigentlichen Steuerungssignal ein "Header" vorgeschaltet ist, der zumindest drei Phasen umfasst, nämlich eine erste Busbeobachtungs-Phase für einen Zeitraum (tO), eine nachfolgende Busanforderungsphase für den Zeitraum (t1), und eine erneute nachfolgende weitere Busbeobachtungsphase für einen Zeitraum (t2), wobei in der Busanforderungsphase für den Zeitraum (t1) von dem betreffenden Teilnehmer/Receiver ein Gleichspannungssignal an die Antennenleitung (11), d.h. den Bus (11') abgegeben wird, wodurch den anderen angeschlossenen Teilnehmern/Receivern (13) eine Busaktivität angezeigt wird.

10. Satelliten-Kommunikationsanlage nach einem der Ansprüche 1 bis 9, **dadurch gekennzeichnet,** dass die Werte für die Busbeobachtungsphase (t0) für die unterschiedlichen Teilnehmer/Receiver zumindest teilweise unterschiedlich vorgewählt oder voreingestellt sind.

11. Satelliten-Kommunikationsanlage nach einem der Ansprüche 1 bis 10, **dadurch gekennzeichnet,** dass bei einer erneuten Zu- oder Anschaltung eines Teilnehmers/Receivers (13) die ihm im Zusammenhang mit einer vorausgegangenen Adressvergabe zugeordneten Zeiten (tl, t2) für die Busanforderungsphase und/oder die nachfolgende zweite Busaktivitätsüberwachungsphase verändert, vorzugsweise erhöht eingestellt sind.

12. Satelliten-Kommunikationsanlage nach einem der Ansprüche 1 bis 11, **dadurch gekennzeichnet,** dass die Zeitphase (t2) für die zweite Busbeobachtungsphase bei allen angeschlossenen Teilnehmern/Receivern (13) kürzer ist als die erste Busbeobachtungsphase mit der Zeit (t0).

13. Satelliten-Kommunikationsanlage nach einem der Ansprüche 1 bis 12, **dadurch gekennzeichnet,** dass alle Teilnehmer/Receiver (13) gleiche Werte für die Zeitdauer (t0) für die erste Busbeobachtungsphase eines Signalbefehls aufweisen.

14. Satelliten-Kommunikationsanlage nach einem der Ansprüche 1 bis 13, **dadurch gekennzeichnet,** dass die angeschlossenen Teilnehmer/Receiver (13) so aufgebaut sind, dass deren Betriebsweise und Ansteuerung auf der Basis eines DiSEqC-Protokolls durchführbar ist.

15. Satelliten-Kommunikationsanlage nach einem der Ansprüche 1 bis 14, **dadurch gekennzeichnet,** dass die angeschlossenen Teilnehmer/Receiver (13) so aufgebaut sind, dass nach dem Senden eines Befehls durch einen Teilnehmer/Receiver (13) für eine minimale Wartezeit kein weiterer Befehl absendbar ist.

16. Verfahren zum Betrieb einer Satelliten-Kommunikationsanlage nach einem der Ansprüche 1 bis 15, **dadurch gekennzeichnet,** dass vor der Absendung eines Steuerungssignals, insbesondere eines Adressanforderungs-Signals oder eines Programmbefehl-Signals von einem Receiver an die Steuerungseinheit (15) zunächst ein Kollisionsschutz-Prüfverfahren mit einer dem eigentlichen Steuerungssignal vorgelagerten Kollisionsschutz-Phase durchgeführt wird, in welcher zunächst der Bus (11') auf Aktivitäten eines anderen Teilnehmers/Receivers (13) und/oder der Steuerungseinheit (15) überprüft wird, so dass nur dann, wenn keine Aktivität auf dem Bus (11') feststellbar ist, von dem betreffenden Teilnehmehmer/Receiver (13) eigentliche Steuerungssignale an die Steuerungseinheit (15) abgesendet werden.

17. Verfahren nach Anspruch 16, **dadurch gekennzeichnet,** dass die Kollisionsschutz-Phase zumindest dreigliedrig ist, und dabei eine erste Busaktivitätsbeobachtungsphase für eine Zeitdauer (t0), in der überprüft wird, ob andere Teilnehmer/Receiver (13) oder die Steuerungseinheit (15) am Bus (11') aktiv sind, eine nachfolgende Busanforderungsphase mit einer Zeitdauer (t2) durchgeführt wird, in welcher ein eine Aktivität signalisierendes Signal von dem Teilnehmer/Receiver (13) an den Bus (11') abgegeben wird, und eine nachfolgende weitere Busbeobachtungsphase für eine zweite Zeitdauer (t2) umfasst, in der kein Signal (11) an den Bus (11') abgegeben wird.

18. Verfahren nach Anspruch 16 oder 17, **dadurch gekennzeichnet,** dass nach Abgabe des Busanforderungs-Signals der Teilnehmer/Receiver (13) zunächst nochmals in eine kein Signal abgebende Busbeobachtungsphase umschaltet, um dann lediglich bei nicht beobachteter Aktivität im Bus (11, 11') ein Andressanforderungs-Signal oder ein Programmbefehl-Signal an den Controller abzugeben.

19. Verfahren nach einem der Ansprüche 16 bis 18, **dadurch gekennzeichnet,** dass das Kollisionsschutz-Prüfverfahren mit seiner Umschaltung zwischen zwei Gleichspannungswerten, vorzugsweise zwischen einem Gleichspannungswert "0" und einem davon abweichenden Gleichspannungswert erfolgt, und dass die Einspeisung eines vordefinierten Gleichspannungswertes durch die anderen angeschlossenen Teilnehmer/Receiver (13) detektierbar und als Busaktivität eines anderen angeschlossenen Teilnehmer/Receivers (13) oder der Steuerungseinheit (15) interpretierbar ist, mit der Folge, dass mit der Abgabe eines eigenen Adressanforderungs-Signals oder eines Programmbefehl-Signals nicht begonnen oder eine dem Kollisionsschutz dienende Vorphase wieder abgebrochen werden muss.

## Claims

1. Satellite communication installation, in particular satellite reception installation having a circuit arrangement (1) for selectively receiving electromagnetic waves which are emitted from one or possibly more satellites with vertical and horizontal polarization in a lower or upper frequency band, as appropriate, having the following features:
- a control unit (15), and
- a data bus for controlling a plurality of subscribers/receivers (13),
characterized by the following further features:
- the data bus comprises a common multimaster data bus (11') which can be used to carry out data communication between the connectable subscribers/ receivers (13) and the control unit (15) for the purpose of controlling and allocating the satellite programmes requested and selected by the individual subscribers/receivers;
- the common multimaster data bus (11') comprises a common antenna line (11), and
- the subscribers/receivers (13) are provided with a device for producing and evaluating a collision prevention signal which ensures that, at one particular instant, communication with the control unit (15) can be carried out only by a single subscriber/receiver (13).

2. Satellite communication installation according to Claim 1, characterized in that the device for producing and evaluating a collision prevention signal is designed such that, before a control signal is dispatched, a collision prevention phase preceding the actual control signal is first executed, said collision prevention phase involving the multimaster data bus (11') first being checked for activities of another subscriber/receiver (13) and/or of the control unit (15), with the result that the subscriber/receiver (13) concerned dispatches actual control signals to the control unit (15) only when no activity can be established on the multimaster data bus (11').

3. Satellite communication installation according to Claim 2, characterized in that the collision prevention phase is in at least three parts and, in this context, comprises a first bus activity observation phase for a time period (t0) in which a check is carried out to determine whether other subscribers/receivers (13) or the control unit (15) are active on the multimaster data bus (11'), a subsequent bus request phase with a time period (t2) in which a signal which signals an activity is output to the multimaster data bus (11') by the subscriber/receiver (13), and a subsequent further bus observation phase for a second time period (t2), in which no signal (11) is output to the multimaster data bus (11').

4. Satellite communication installation according to one of Claims 1 to 3, characterized in that the data transmission serving the purpose of collision prevention on the multimaster bus (11') for controlling the connected subscribers/receivers (13) is based on the basis of a signal changeover, communication between a subscriber/receiver (13) and the control unit (15) being able to be started only when the presence of a predefined signal has first been detected on the multimaster bus (11').

5. Satellite communication installation according to Claim 4, characterized in that the signal changeover is based on the basis of a DC voltage level changeover, communication between a subscriber/receiver (13) and the control unit (15) being able to be started only when the presence of a predefined DC voltage level has first been detected on the multimaster bus (11').

6. Satellite communication installation according to one of Claims 1 to 5, characterized in that the data transmission serving the purpose of collision prevention on the multimaster bus (11') for controlling the connected subscribers/receivers (13) is based on a signal changeover system, communication between a subscriber/receiver (13) and the control unit (15) being able to be carried out only when a predefined signal has been detected on the multimaster bus (11').

7. Satellite communication installation according to Claim 6, characterized in that the signal changeover is based on a DC voltage level changeover system, communication between a subscriber/receiver (13) and the control unit (15) being able to be carried out only when a predefined DC voltage level has been detected on the multimaster bus (11').

8. Satellite communication installation according to one of Claims 1 to 7, characterized in that the connected subscribers/receivers (13) comprise a DC voltage detector device or a DC voltage threshold value discriminator which can be used to recognize the "blocked" or "operational" operating state for the subscriber/receiver (13) concerned on the basis of a DC voltage signal which is higher or lower than a threshold value.

9. Satellite communication installation according to one of Claims 1 to 8, characterized in that the signal structure for data interchange between a subscriber/receiver (13) and the control unit (15) is fundamentally designed such that the actual control signal is preceded by a "header" comprising at least three phases, namely a first bus observation phase for a time period (t0), a subsequent bus request phase for the time period (tl), and a renewed subsequent further bus observation phase for a time period (t2), the bus request phase involving the subscriber/ receiver concerned outputting a DC voltage signal to the antenna line (11), i.e. to the bus (11'), for the time period (t1), which indicates bus activity to the other connected subscribers/receivers (13).

10. Satellite communication installation according to one of Claims 1 to 9, characterized in that at least some of the values for the bus observation phase (tO) are preselected or preset to be different for the different subscribers/receivers.

11. Satellite communication installation according to one of Claims 1 to 10, characterized in that, when a subscriber/receiver (13) is newly added or connected, the times (tl, t2) allocated to it in connection with a preceding address allocation for the bus request phase and/or the subsequent second bus activity monitoring phase are set so as to be changed, preferably increased.

12. Satellite communication installation according to one of Claims 1 to 11, characterized in that the time phase (t2) for the second bus observation phase is shorter than the first bus observation phase with the time (tO) for all connected subscribers/receivers (13).

13. Satellite communication installation according to one of Claims 1 to 12, characterized in that all the subscribers/receivers (13) have the same values for the time period (t0) for the first bus observation phase of a signal instruction.

14. Satellite communication installation according to one of Claims 1 to 13, characterized in that the connected subscribers/receivers (13) are designed such that their mode of operation and driving can be implemented on the basis of a DiSEqC protocol.

15. Satellite communication installation according to one of Claims 1 to 14, characterized in that the connected subscribers/receivers (13) are designed such that, once a subscriber/receiver (13) has sent an instruction, no further instruction can be dispatched for a minimum waiting time.

16. Method for operating a satellite communication installation according to one of Claims 1 to 15, characterized in that, before a control signal, in particular an address request signal or a programme instruction signal, is dispatched to the control unit (15) by a receiver, a collision prevention checking method having a collision prevention phase which precedes the actual control signal is first carried out, said collision prevention phase involving the bus (11') first being checked for activities of another subscriber/receiver (13) and/or of the control unit (15), with the result that the subscriber/receiver (13) concerned dispatches actual control signals to the control unit (15) only when no activity can be established on the bus (11').

17. Method according to Claim 16, characterized in that the collision prevention phase is in at least three parts and, in this context, comprises a first bus activity observation phase for a time period (tO) in which a check is carried out to determine whether other subscribers/receivers (13) or the control unit (15) are active on the bus (11'), a subsequent bus request phase with a time period (t2) is carried out [sic] in which a signal which signals an activity is output to the bus (11') by the subscriber/receiver (13), and a subsequent further bus observation phase for a second time period (t2), in which no signal (11) is output to the bus (11').

18. Method according to Claim 16 or 17, characterized in that, once the bus request signal has been output, the subscriber/receiver (13) first changes over to a bus observation phase again, which outputs no signal, in order then to output an address request signal or a programme instruction signal to the controller only when there is no activity observed on the bus (11, 11').

19. Method according to one of Claims 16 to 18, characterized in that the collision prevention checking method takes place with its changeover between two DC voltage values, preferably between a DC voltage value "0" and a DC voltage value which is different from this, and in that the supply of a predefined DC voltage value can be detected by the other connected subscribers/receivers (13) and can be interpreted as bus activity of another connected subscriber/receiver (13) or of the control unit (15), with the result that the output of an individual address request signal or of a programme instruction signal [lacuna] not be started or a preliminary phase serving the purpose of collision prevention must be terminated again.

## Revendications

1. Installation de communication par satellite, en particulier installation de réception par satellite comprenant un agencement de circuit (1) pour la réception sélective d'ondes électromagnétiques qui sont émises par un ou le cas échéant par plusieurs satellites avec polarisation verticale et horizontale dans une bande de fréquence inférieure ou supérieure, présentant les éléments suivants :
- une unité de commande (15), et
- un bus de données pour la commande de plusieurs participants/récepteurs (13),
caractérisée par les caractéristiques suivantes :
- le bus de données comprend un bus de données commun multi-maître (11') via lequel on peut procéder à une communication de données entre les participants/récepteurs (13) à raccorder et l'unité de commande (15) pour la commande et l'attribution des programmes satellites choisis et appelés par les participants/récepteurs individuels ;
- le bus de données commun multi-maître (11') comprend une ligne d'antenne commune (11), et
- les participants/récepteurs (13) sont pourvus d'un dispositif pour engendrer et évaluer un signal de protection anticollision qui garantit qu'à un instant donné une communication avec l'unité de commande (15) ne peut avoir lieu que de la part d'un participant/récepteur (13) unique.

2. Installation de communication par satellite selon la revendication 1, caractérisée en ce que le dispositif pour engendrer et évaluer un signal de protection anticollision est ainsi réalisé qu'avant d'envoyer un signal de commande, il exécute tout d'abord une phase de protection anticollision précédemment au signal de commande proprement dit, phase dans laquelle le bus de données multi-maître (11') vérifie tout d'abord les activités d'un autre participant/récepteur (13) et/ou de l'unité de commande (15), de sorte que le participant/récepteur concerné (13) émet des signaux de commande effectifs à l'unité de commande (15) uniquement lorsqu'on détermine qu'il n'y a aucune activité sur le bus de données multi-maître (11').

3. Installation de communication par satellite selon la revendication 2, caractérisée en ce que la phase de protection anticollision est au moins divisée en trois, et comprend une première phase d'observation d'activité de bus, pendant une durée temporelle (t0), dans laquelle on vérifie si d'autres participants/récepteurs (13), ou bien l'unité de commande (15) sont actifs sur le bus de données multi-maître (11'), une phase d'appel de bus successive, pendant une durée temporelle (t2), dans laquelle un signal qui signale une activité est envoyé par le participant/récepteur (13) au bus de données multi-maître (11'), et une autre phase d'observation de bus successive, pendant une deuxième durée temporelle (t2) dans laquelle aucun signal (11) n'est fourni au bus de données multi-maître (11').

4. Installation de communication par satellite selon l'une des revendications 1 à 3, caractérisée en ce que la transmission de données, qui sert à la protection anticollision, sur le bus multi-maître (11') pour la commande du participant/récepteur à raccorder (13) a lieu sur la base d'une commutation de signal, et en ce qu'une communication entre un participant/récepteur (13) et l'unité de commande (15) ne peut être commencée que lorsqu'on a tout d'abord détecté sur le bus mufti-maître (11') la présence d'un signal prédéfini.

5. Installation de communication par satellite selon la revendication 4, caractérisée en ce que la commutation de signal est basée sur une commutation de niveau de tension continue, et en ce qu'une communication entre un participant/récepteur (13) et l'unité de commande (15) peut être uniquement commencée lorsqu'on a tout d'abord détecté sur le bus multi-maître (11') la présence d'un niveau de tension continue prédéfini.

6. Installation de communication par satellite selon l'une des revendications 1 à 5, caractérisée en ce que la transmission des données, servant à la protection anticollision, vers le bus multi-maître (11') pour la commande du participant/récepteur raccordé (13) est basée sur un système de commutation de signal, et en ce qu'une communication entre un participant/récepteur (13) et l'unité de commande (15) ne peut être effectuée que lors de la détection d'un signal prédéfini sur le bus multi-maître (11').

7. Installation de communication par satellite selon la revendication 6, caractérisée en ce que la communication de signal est basée sur un système de communication à niveau de tension constant, et en ce qu'une communication entre un participant/récepteur (13) et l'unité de commande (15) ne peut être exécutée que lors de la détection d'un niveau de tension continue prédéfini sur le bus multi-maître (11').

8. Installation de communication par satellite selon l'une des revendications 1 à 7, caractérisée en ce que les participants/récepteurs raccordés (13) comprennent un dispositif de détection de tension continue, ou un discriminateur de valeur de seuil de tension continue, au moyen duquel il est possible de reconnaître chez le participant/récepteur concerné (13) un état de fonctionnement "bloqué", ou bien "prêt au fonctionnement", en fonction d'un signal de tension constante plus élevé ou plus petit qu'une valeur seuil.

9. Installation de communication par satellite selon l'une des revendications 1 à 8, caractérisée en ce que la structure des signaux pour l'échange de données entre un participant/récepteur (13) et l'unité de commande (15) est par principe ainsi conçue qu'il est prévu en avance du signal de commande proprement dit un "en-tête" qui comprend au moins trois phases, à savoir une première phase d'observation de bus pour une durée temporelle (t0), une phase d'interrogation de bus successive pendant la durée temporelle (tl), et une nouvelle phase d'observation de bus successive pendant une durée temporelle (t2), et en ce que dans la phase d'interrogation de bus et pendant la période temporelle (tl) le participant/récepteur concerné délivre un signal de tension constante à la ligne d'antenne (11), c'est-à-dire au bus (11'), grâce à quoi on indique une activité du bus aux autres participants/récepteurs raccordés (13).

10. Installation de communication par satellite selon l'une des revendications 1 à 9, caractérisée en ce que les valeurs pour la phase d'observation de bus (t0) pour les différents participants/récepteurs sont préalablement choisies ou préréglées au moins partiellement différentes.

11. Installation de communication par satellite selon l'une des revendications 1 à 10, caractérisée en ce que lors d'un nouveau branchement d'un participant/récepteur (13), les durées qui lui sont attribuées en combinaison avec une attribution d'adresse précédente (tl, t2) pour la phase d'interrogation de bus et/ou pour la deuxième phase de surveillance d'activité de bus successive sont modifiées et de préférence réglées de manière augmentée.

12. Installation de communication par satellite selon l'une des revendications 1 à 11, caractérisée en ce que la phase temporelle (t2) pour la deuxième phase d'observation de bus est plus courte chez tous les participants/récepteurs raccordés (13) que la première phase d'observation de bus présentant la durée (t0).

13. Installation de communication par satellite selon l'une des revendications 1 à 12, caractérisée en ce que tous les participants/récepteurs (13) présentent les mêmes valeurs pour la durée temporelle (t0) pour la première phase d'observation de bus d'un ordre de signal.

14. Installation de communication par satellite selon l'une des revendications 1 à 13, caractérisée en ce que les participants/récepteurs raccordés (13) sont ainsi réalisés que leur mode de fonctionnement et leur commande peuvent être exécutés sur la base d'un protocole DiSEqC.

15. Installation de communication par satellite selon l'une des revendications 1 à 14, caractérisée en ce que les participants/récepteurs raccordés (13) sont ainsi réalisés qu'après l'envoi d'un ordre par un participant/récepteur (13) il n'est possible d'envoyer aucun autre ordre pendant une durée d'attente minimale.

16. Procédé pour le fonctionnement d'une installation de communication par satellite selon l'une des revendications 1 à 15, caractérisé en ce que, avant l'envoi d'un signal de commande, en particulier un signal d'interrogation d'adresse ou un signal d'ordre de programme depuis un récepteur à l'unité de commande (15) on procède tout d'abord à une vérification de protection anticollision avec une phase de protection anticollision placée avant le signal de commande proprement dit, phase pendant laquelle on vérifie tout d'abord le bus (11') vis-à-vis des activités d'un autre participant/récepteur (13) et/ou de l'unité de commande (15), de sorte que l'on envoie depuis le participant/récepteur concerné (13) des signaux de commande effectifs à l'unité de commande (15) uniquement lorsqu'on ne détermine aucune activité sur le bus (11').

17. Procédé selon la revendication 16, caractérisé en ce que la phase de protection anticollision comprend au moins trois parties, c'est-à-dire une première phase d'observation d'activité de bus pendant une durée temporelle (t0) pendant laquelle on vérifie si d'autres participants/récepteurs (13) ou l'unité de commande (15) sont actifs sur le bus (11'), une phase d'interrogation de bus successive avec une durée temporelle (t2) pendant laquelle un signal qui signale une activité est fourni par le participant/récepteur (13) vers le bus (11'), et une autre phase d'observation de bus successive pendant une deuxième durée temporelle (t2), pendant laquelle on ne fournit aucun signal (11) au bus (11').

18. Procédé selon l'une ou l'autre des revendications 16 et 17, caractérisé en ce qu'après avoir fourni le signal d'interrogation de bus, le participant/récepteur (13) effectue tout d'abord à nouveau une communication dans une phase d'observation de bus pendant laquelle aucun signal n'est fourni, afin de fournir un signal d'interrogation d'adresse, ou bien un signal d'ordre de programme à l'unité de commande uniquement lorsqu'on n'observe aucune activité sur le bus (11, 11').

19. Procédé selon l'une des revendications 16 à 18, caractérisé en ce que l'opération de vérification de protection anticollision avec sa commutation entre deux valeurs de tension continue a lieu de préférence entre une valeur de tension continue "0" et une valeur de tension continue différente de celle-ci, et en ce que l'alimentation d'une valeur de tension continue prédéfinie par les autres participants/récepteurs raccordés (13) est détectable et interprétable comme représentant l'activité sur le bus d'un autre participant/récepteur raccordé (13), ou de l'unité de commande (15), avec pour conséquence que l'on ne commence pas la fourniture d'un signal d'interrogation d'adresse propre ni d'un signal d'ordre de programme, ou bien que l'on doit à nouveau interrompre une phase préliminaire servant à la protection anticollision.
